# EUROPÄISCHE PATENTSCHRIFT

(11) **EP 3 453 250 B1**
(45) Veröffentlichungstag und Bekanntmachung des Hinweises auf die Patenterteilung: **10.03.2021**
(21) Anmeldenummer: 18181119.1
(22) Anmeldetag: 02.07.2018
(51) Int. Cl.: A01F 15/08

(54) **BALLENPRESSE SOWIE VERFAHREN ZU DEREN BETRIEB**
BALER AND METHOD FOR OPERATING THE SAME
PRESSE À BALLES AINSI QUE SON PROCÉDÉ DE FONCTIONNEMENT

(30) Priorität: 12.09.2017 DE 102017121090
(43) Veröffentlichungstag der Anmeldung: 13.03.2019
(73) Patentinhaber: Usines CLAAS France S.A.S, 57140 St. Rémy / Woippy (FR)
(72) Erfinder: Wucher, Renaud, 570170 Metz (FR); Leseur, Florentin, 52340 Ageville (FR)
(74) Vertreter: CLAAS Gruppe

(56) Entgegenhaltungen:
- EP-A1- 1 974 601
- WO-A1-2014/128097
- DE-A1-102014 104 932

## Beschreibung

Die vorliegende Anmeldung betrifft eine Ballenpresse gemäß dem Oberbegriff von Anspruch 1. Eine solche Ballenpresse weist insbesondere einen Hauptverdichter auf, mittels dessen zu verdichtendes Material, beispielsweise Stroh, sukzessive in Form eines Ballens pressbar ist. Das gepresste Material kann insbesondere mittels einer Bindeschnur, die mittels einer Bindeeinrichtung appliziert wird, zusammengefasst werden, sodass das gepresste Material schließlich in Form eines gepressten Ballens vorliegt.

Weiterhin betrifft die vorliegende Anmeldung ein Verfahren zum Betrieb einer Ballenpresse gemäß dem Oberbegriff von Anspruch 7. Dieses sieht insbesondere vor, dass der Hauptverdichter fortwährend oszillierend innerhalb eines Hauptkanals der Ballenpresse hin und her bewegt wird, wobei Zuge dessen das dem Hauptkanal zugeführte Material sukzessive gepresst wird.

Ballenpressen sowie Verfahren der eingangs beschriebenen Art sind im Stand der Technik bereits bekannt. Hierzu wird insbesondere auf die Internationale Patentanmeldung WO 2014/128097 A1 verwiesen. Diese befasst sich mit der Problematik der Inbetriebnahme einer solchen Ballenpresse. Diese ist darauf zurückzuführen, dass der Hauptverdichter nach dem Abschalten der Ballenpresse oftmals in einer ungünstigen Position innerhalb des Hauptkanals zum Stehen kommen kann, sodass beim nächsten Anfahren des Hauptverdichters im Zuge der nächsten Inbetriebnahme der Ballenpresse der Hauptverdichter unmittelbar gegen das in dem Hauptkanal befindliche Material pressen muss. Die hierfür im Moment des Anfahrens erforderliche Presskraft kann jedoch oftmals nicht unmittelbar aufgebaut werden, sodass die Inbetriebnahme der Ballenpresse fehlschlägt. Das genannte Dokument schlägt daher vor, die Antriebseinrichtung der Ballenpresse im Zuge einer jeden Inbetriebnahme der letzteren in einer vordefinierte Startposition zu überführen, von der ausgehend vor einem ersten Eingriff des Hauptverdichters mit dem zu pressenden Material ein ausreichender Leistungsaufbau möglich ist, worauf hin die Ballenpresse dauerhaft zuverlässig gestartet werden kann.

Als weiterer Stand der Technik wird auf die Internationale Patentanmeldung WO 2016/036894 A1 verwiesen. Diese beschäftigt sich mit einem vergleichbaren Problem, wobei zu Lösung vorgeschlagen wird, den Hauptverdichter im Zuge der Abschaltung der Ballenpresse in einer vorbestimmten Position zum Stehen kommen zu lassen. Alternativ wird vorgeschlagen, im Zuge einer jeden Inbetriebnahme der Ballenpresse den Hauptverdichter sowie ein an der Antriebseinrichtung angeordnetes Schwungrad wiederholt gepulst zu beschleunigen, sodass ein sukzessiver Energieaufbau insbesondere an dem Schwungrad stattfindet. Sobald ein gewisses Niveau erreicht ist, kann der Hauptverdichter schließlich auch gegen unmittelbar anstehendes gepresstes Material zuverlässig starten.

Zusätzlich zu der vorstehend beschriebenen Startproblematik von Ballenpressen, die prinzipbedingt zumindest bei Quaderballenpressen in aller Regel auftritt, ist es oftmals erforderlich, eine Wartung durchzuführen und das jeweilige Wartungsergebnis anschließend zu kontrollieren. Dies läuft in aller Regel darauf hinaus, dass nach einer durchgeführten Wartung die jeweilige Ballenpresse in Betrieb genommen wird und die Ballenpresse sodann daraufhin überwacht wird, ob sie ordnungsgemäß funktioniert. Die genauen Betriebsabläufe der einzelnen Komponenten und Bauteile können gleichwohl nicht einzeln untersucht und beurteilt werden. Dies wäre jedoch für eine detailliertere Beurteilung eine jeweiligen Betriebszustandes der jeweiligen Ballenpresse wünschenswert.

Der vorliegenden Anmeldung liegt mithin die Aufgabe zugrunde, eine Ballenpresse sowie ein Verfahren zu deren Betrieb bereitzustellen, die zusätzlich zu einem zuverlässigen Start bzw. einer zuverlässigen Inbetriebnahme der Ballenpresse ferner eine Kontrolle über den Zustand derselben erlaubt.

Die zugrunde liegende Aufgabe wird erfindungsgemäß durch eine Ballenpresse mit den Merkmalen des Anspruchs 1 gelöst. Vorteilhafte Ausgestaltungen begeben sich anhand der Unteransprüche 2 bis 6.

Unter dem "Hauptkanal" wird im Sinne der vorliegenden Anmeldung insbesondere ein Kanal mit rechteckförmigem Querschnitt verstanden. Der Hauptkanal ist dabei typischerweise in sich gerade ausgeführt, sodass der Hauptverdichter die oszillierende Hin-und-her-Bewegung entlang einer geraden Kanalachse des Hauptkanals ausführen kann.

Die "Bindeeinrichtung" beschreibt im Sinne der vorliegenden Anmeldung eine Einrichtung, die dazu geeignet ist, gepresstes Material zu einem Ballen zusammenzufassen. Dies erfolgt typischerweise unter Verwendung einer Bindeschnur, mittels derer das Material noch innerhalb des Hauptkanals eingefasst wird und die mittels der Bindeeinrichtung in geeigneter Weise verknotet wird, sodass sie den Ballen dauerhaft einfasst. Die Bindeeinrichtung kann insbesondere aus einer Mehrzahl einzelner Elemente bestehen, die gemeinsam dazu geeignet sind, eine Bindeschnur um das gepresste Material herum zu führen und die Bindeschnur letztlich mit sich selbst zu verknoten.

Unter der "Übertragungseinrichtung" ist im Sinne der vorliegenden Anmeldung grundsätzlich jede Einrichtung zu verstehen, die dazu geeignet ist, eine Kraftübertragung zwischen dem Hauptverdichter und der Antriebseinrichtung zu bewerkstelligen. Typischerweise ist die Übertragungseinrichtung von einer Art Pleuel gebildet, das sowohl gelenkig an dem Hauptverdichter als auch gelenkig an der Antriebseinrichtung angeschlossen ist. An letzterer bewirkt die Übertragungseinrichtung typischerweise mit einem Kurbelarm zusammen, der um eine Antriebsachse drehantreibbar gelagert ist, wobei sich die Antriebsachse senkrecht zu einer Kanalachse des Hauptkanals erstreckt. Dabei versteht es sich, dass eine fortwährende Rotation eines solchen Kurbelarms um die Antriebsachse in Zusammenwirkung mit der Übertragungseinrichtung dazu geeignet ist, den Hauptverdichter fortwährend oszillierend innerhalb des Hauptkanals vor und zurück bzw. hin und her zu bewegen.

Bei der "Antriebseinrichtung" kann es sich im Sinne der vorliegenden Anmeldung um jede Art von Einrichtung handeln, die dazu geeignet ist, zumindest den Hauptverdichter in Bewegung zu versetzen. Hierbei ist es insbesondere denkbar, dass die Antriebseinrichtung lediglich eine mittelbare Wirkung entfaltet und nicht als solche geeignet ist, eine erforderliche Antriebsleistung selbst zu erzeugen. Stattdessen kann es sich bei der Antriebseinrichtung vor allem um eine Getriebeeinrichtung handeln, die beispielsweise an eine Nebenabtriebswelle einer landwirtschaftlichen Arbeitsmaschine angeschlossen werden kann. Dies ist insbesondere bei fahrbaren Ballenpressen typischerweise der Fall, die hier mit umfasst sein sollen. Die "Antriebseinrichtung" ist dann lediglich dafür zuständig, ein von der Nebenabtriebswelle abgenommenes Drehmoment derart umzusetzen, dass sich die oszillierende Bewegung des Hauptverdichters ergibt. Ferner ist die Antriebseinrichtung in aller Regel auch für den Betrieb der sonstigen Einrichtungen der Ballenpresse, beispielsweise der Bindeeinrichtung und eines Vorverdichters, zuständig.

Erfindungsgemäß umfasst die Ballenpresse eine Steuerungseinrichtung mittels derer erstere in verschiedenen Modi betreibbar ist. Zunächst ist die Ballenpresse in einem (normalen) Betriebsmodus betreibbar, in dem das jeweilige Material pressbar und schließlich zu dem Ballen formbar ist.

Weiterhin ist die Steuerungseinrichtung dazu geeignet, die Ballenpresse in einem Startmodus zu betreiben, in dem zumindest der Hauptverdichter im Vergleich zu dem Betriebsmodus in einen entgegengesetzten Bewegungssinn bewegbar ist. Im Hinblick auf die vorstehend beschriebene Problematik ist es mithin möglich, den Hauptverdichter ausgehend von einer ungünstigen Stellung, in der er beim Übergang in den Betriebsmodus der Ballenpresse unmittelbar gegen bereits vorverdichtetes Material pressen müsste, "zurückzuziehen" und auf diese Weise der Belastungsspitze zunächst auszuweichen. Insbesondere kann die eigentliche Bewegung des Hauptverdichters, nämlich weiter auf das zu verdichtende Material zu, umgekehrt werden, sodass der Hauptverdichter zumindest zunächst von dem verdichteten Material weg und somit auf die Antriebseinrichtung zu bewegt wird. Auf diese Weise kann die Antriebseinrichtung in eine Startposition überführt werden, von der ausgehend zunächst ein ausreichender Energieaufbau möglich ist, sodass im Zuge des Betriebs der Ballenpresse in ihrem normalen Betriebsmodus der nächste Eingriff des Hauptverdichters mit dem zu verdichtenden Material vergleichsweise spät innerhalb des jeweiligen Bewegungszyklus stattfindet, sodass bis dahin der Hauptverdichter ausreichend stark beschleunigt ist, um die erforderliche Presskraft aufzubringen. Die Inbetriebnahme der Ballenpresse ist daraufhin zuverlässig möglich.

Weiterhin ist die Steuerungseinrichtung dazu geeignet, die Ballenpresse ferner in einem Wartungsmodus zu betreiben. Dieser Wartungsmodus ist dadurch gekennzeichnet, dass der Hauptverdichter mit einer Wartungsgeschwindigkeit bewegbar ist, die gegenüber einer in den Betriebsmodus verwendeten Betriebsgeschwindigkeit reduziert ist. Beispielsweise ist es denkbar, dass der Hauptverdichter im Betrieb der Ballenpresse in ihrem Wartungsmodus lediglich mit 30 % seiner im Betriebsmodus typischen Betriebsgeschwindigkeit läuft. Dabei versteht es sich, dass die übrigen Komponenten der Ballenpresse im Zuge von deren Betrieb in dem Wartungsmodus gleichfalls mit einer reduzierten Wartungsgeschwindigkeit betreibbar sind. Der Wartungsmodus bietet den besonderen Vorteil, dass die mitunter äußerst schnell innerhalb der Ballenpresse ablaufenden Vorgänge mittels optischer Inspektion begutachtet werden können, um den Zustand der Ballenpresse insgesamt zu beurteilen. Dies ist sowohl im Hinblick auf die Planung von etwaigen Wartungsarbeiten als auch die Überwachung des Erfolges durchgeführter Wartungsarbeiten besonders hilfreich.

In einer vorteilhaften Ausgestaltung der erfindungsgemäßen Ballenpresse umfasst die Antriebseinrichtung mindestens einen Kurbelarm, der um eine zu der Kanalachse des Hauptkanals senkrechte Antriebsachse drehantreibbar ist. Der Kurbelarm wirkt dabei an seinem von der Antriebsachse radial beabstandeten Ende unter Ausbildung eines Drehgelenks mit der Übertragungseinrichtung zusammen. Auf diese Weise ist die Übertragungseinrichtung relativ zu dem Kurbelarm frei um eine Gelenkachse verdrehbar. Die Übertragungseinrichtung ist wiederum mit dem Hauptverdichter verbunden, wobei auch diese Verbindung unter Ausbildung eines Drehgelenks erfolgt. Die doppelt gelenkige Anbindung der Übertragungseinrichtung führt mithin dazu, dass selbige lediglich zur Übertragung von Normalkräften, jedoch nicht von Querkräften und/oder Biegemomenten geeignet ist. Diese Ausführung ist insoweit besonders geeignet für die erfindungsgemäße Ballenpresse, als die Rotationsbewegung des Kurbelarms um die Antriebsachse mittels der Übersetzung über das Übertragungselement zu der gewünschten oszillierende in Hin-und-her-Bewegung innerhalb des Hauptkanals führt.

Weiterhin kann eine solche Ballenpresse von besonderem Vorteil sein, die einen Nebenantrieb aufweist, der zumindest mittelbar, vorzugsweise unmittelbar, auf den Hauptverdichter einwirken kann. Der Nebenantrieb ist dadurch gekennzeichnet, dass er dazu geeignet ist, den Hauptverdichter zumindest in dem Startmodus der Ballenpresse in dem gegenüber dem Betriebsmodus entgegengesetzten Bewegungssinn innerhalb des Hauptkanals zu bewegen. Auf diese Weise kann die Ballenpresse insbesondere in ihrem Startmodus betrieben werden, ohne dass hierfür die gesamte Antriebseinrichtung der Ballenpresse aktiviert werden muss.

Den Nebenantrieb weiter ausgestaltend umfasst dieser eine Kolben-Zylinder-Einheit, die vorzugsweise unmittelbar mit einem Kurbelarm der Antriebseinrichtung zusammenwirkt. Letzterer ist vorstehend bereits beschrieben. Das Zusammenwirken zwischen dem Nebenantrieb und dem Kurbelarm ist dabei derart ausgebildet, dass die Betätigung der Kolben-Zylinder-Einheit zu einer Rotation des Kurbelarms um dessen Antriebsachse führt. In dem Interesse, den Hauptverdichter entgegen seinem im Betriebsmodus typischen Bewegungssinn zu bewegen, bewirkt der Nebenantrieb vorzugsweise eine Rotation des Kurbelarms, deren Richtung einer Rotationsrichtung des Kurbelarms bei Betrieb der Ballenpresse in ihrem Betriebsmodus gleichfalls entgegengesetzt ist. Vorteilhafterweise wirkt der Nebenantrieb mit einem Zahnradgetriebe zusammen, das dazu geeignet ist, die lineare Bewegung der Kolben-Zylinder-Einheit in eine Rotationsbewegung des Kurbelarms zu übersetzen.

Die erfindungsgemäße Ballenpresse weiter ausgestaltend umfasst diese mindestens ein Energiespeichersystem, das mit einer Antriebswelle der Antriebseinrichtung zusammenwirkt. Das Energiespeichersystem ist dazu geeignet, eine Bremsenergie, die im Zuge einer Bremsung der Antriebswelle erforderlich ist, zu speichern und umgekehrt gespeicherte Energie in Form von Beschleunigungsenergie auf die Antriebswelle zu übertragen, sodass diese beschleunigt wird. Ein derartiges Energiespeichersystem ist besonders gut dazu geeignet, Belastungsspitzen der Antriebseinrichtung abzufedern und ein Anfahren der Antriebseinrichtung insgesamt zu unterstützen.

Vorteilhafterweise umfasst das Energiespeichersystem hierfür mindestens eine elektrische Maschine sowie einen dieser zugeordneten Elektrospeicher. Letzterer kann insbesondere von einer Batterie oder einem Kondensator gebildet sein. Die elektrische Maschine ist mit der Antriebswelle gekoppelt oder koppelbar, sodass sie dazu geeignet ist, in einem Generatorbetrieb eine Rotationsenergie der Antriebswelle in elektrische Energie umzuwandeln und diese in dem Elektrospeicher zu speichern. Hierzu versteht es sich, dass die elektrische Maschine und der Elektrospeicher mittels einer elektrischen Leitung miteinander verbunden sind. Umgekehrt kann die elektrische Maschine in einem Motorbetrieb betrieben werden, wobei von dem Elektrospeicher zur Verfügung gestellte elektrische Energie in Rotationsenergie umgewandelt wird, die sodann aufgrund der Koppelung der elektrischen Maschine mit der Antriebswelle schließlich auf letztere wirkt.

Alternativ zu einem "elektrischen Energiespeichersystem" kann das Energiespeichersystem auch hydraulisch ausgebildet sein, wobei es eine hydraulische Maschine sowie einen Hydraulikspeicher umfasst. Analog zu der vorstehenden Beschreibung ist die hydraulische Maschine mit der Antriebswelle gekoppelt oder koppelbar. Hierdurch ist sie dazu geeignet, in einem Pumpbetrieb die Rotationsenergie der Antriebswelle in hydraulische Energie umzuwandeln und in dem Hydraulikspeicher zu speichern. Hierzu sind die hydraulische Maschine und der Hydraulikspeicher mittels mindestens einer Hydraulikleitung strömungstechnisch miteinander verbunden. In einem Motorbetrieb kann die hydraulische Maschine schließlich von dem Hydraulikspeicher zur Verfügung gestellte Energie wieder in Rotationsenergie umwandeln und auf die Antriebswelle übertragen.

Sowohl bei der Ausgestaltung des Energiespeichersystems als "elektrisches Energiespeichersystem" als auch einer solchen als "hydraulisches Energiespeichersystem" ist es denkbar, eine jeweilige landwirtschaftliche Arbeitsmaschine, die die Ballenpresse betreibt, zum Betrieb der jeweiligen Maschine (elektrisch oder hydraulisch) heranzuziehen. Insbesondere kann die jeweilige Maschine an einen zugehörigen Speicher der landwirtschaftlichen Arbeitsmaschine angeschlossen werden.

In verfahrenstechnischer Hinsicht wird die zugrunde liegende Aufgabe mittels der Verfahrensschritte des Anspruchs 7 gelöst. Vorteilhafte Ausgestaltungen dieses Verfahrens ergeben sich aus den Unteransprüchen 8 bis 11.

In dem erfindungsgemäßen Verfahren wird eine jeweilige Ballenpresse in einem Wartungsmodus und in einem Startmodus betrieben, wobei im Zuge des Betriebs der Ballenpresse in ihrem Wartungsmodus zumindest der Hauptverdichter in einer Wartungsgeschwindigkeit betrieben wird, die gegenüber einer in einem Betriebsmodus verwendeten Betriebsgeschwindigkeit reduziert ist. In dem Startmodus wird die Antriebseinrichtung derart angesteuert, dass zumindest der Hauptverdichter in einem gegenüber dem Betriebsmodus entgegengesetzten Bewegungssinn bewegt wird, bis die Antriebseinrichtung eine Startposition einnimmt. Vorteilhafterweise wirkt sich zumindest der Wartungsmodus neben dem Hauptverdichter auch auf weitere Einrichtungen der Ballenpresse aus, beispielsweise einen Vorverdichter und/oder die Bindeeinrichtung.

Das erfindungsgemäße Verfahren ist mittels der erfindungsgemäßen Ballenpresse besonders einfach durchführbar. Die sich ergebenden Vorteile sind bereits vorstehend im Zusammenhang mit der Ballenpresse dargelegt worden.

In einer vorteilhaften Ausgestaltung des erfindungsgemäßen Verfahrens beträgt die Wartungsgeschwindigkeit, mit der zumindest der Hauptverdichter im Wartungsmodus der Ballenpresse betrieben wird, höchstens 50 %, vorzugsweise höchstens 40 %, weiter vorzugsweise höchstens 30 %, der Betriebsgeschwindigkeit. Eine derartige Reduktion der Betriebsgeschwindigkeit ist besonders gut geeignet, die einzelnen Abläufe während des Betriebs der Ballenpresse optisch zu inspizieren und einen Zustand der Ballenpresse zu beurteilen.

Weiterhin ist ein solches Verfahren von besonderem Vorteil, bei dem der Hauptverdichter im Zuge der Überführung der Ballenpresse von ihrem Startmodus in ihren Betriebsmodus ausgehend von einer Startposition der Antriebseinrichtung zunächst innerhalb des Hauptkanals in eine der Antriebseinrichtung zugewandte Richtung bewegt wird. Dies hat zur Folge, dass der Hauptverdichter bei einer letztlichen Überführung der Ballenpresse in ihren Betriebsmodus zunächst einen fast vollständigen Zyklus ausführen kann, bevor er mit dem zu pressenden Material in Kontakt kommt und die notwendige Presskraft aufgebracht werden muss. Somit wird der Hauptverdichter zunächst ausgehend von der Startposition der Antriebseinrichtung zurückgezogen und anschließend wieder in Richtung des Materials vorgeschoben bis er schließlich das Material erreicht. Entsprechend ist die Startposition der Antriebseinrichtung vorteilhafterweise derart ausgebildet, dass sie mit einer Positionierung des Hauptverdichters innerhalb des Hauptkanals korrespondiert, bei deren Einnahme der Hauptverdichter sich in unmittelbarer Nähe zu dem zu pressenden Material bzw. in einer fast maximal von der Antriebseinrichtung abgewandten Stellung befindet.

Weiterhin ist ein solches Verfahren von besonderem Vorteil, das zum Betrieb einer Ballenpresse verwendet wird, deren Antriebseinrichtung mindestens einen Kurbelarm aufweist, der um eine zu der Kanalachse des Hauptkanals senkrechte Antriebsachse drehantreibbar ist, wobei der Kurbelarm an einem von der Antriebsachse radial beabstandeten Ende unter Ausbildung eines Drehgelenks mit der Übertragungseinrichtung zusammenwirkt, die wiederum unter Ausbildung eines Drehgelenks mit dem Hauptverdichter zusammenwirkt. Dieses Verfahren sieht vor, dass der Startmodus derart ausgeführt wird, dass eine Längsachse des Kurbelarms bei Vorliegen der Antriebseinrichtung in ihrer Startposition eine bestimmte Ausrichtung einnimmt. Diese Ausrichtung wird bezogen auf ein Koordinatensystem, das gedacht in die Antriebsachse gelegt wird, wobei sich die zweidimensionale Ebene des Koordinatensystems senkrecht zu der Antriebsachse erstreckt, wobei eine positive x-Achse des Koordinatensystems parallel zu der Kanalachse des Hauptkanals orientiert ist. Die Längsachse des Kurbelarms schließt mit der positiven x-Achse dieses Koordinatensystems im Rahmen des bevorzugten Verfahrens einen Winkel zwischen 5° und 40°, vorzugsweise zwischen 10° und 30°, weiter vorzugsweise einen Winkel von 20°, ein. Dieser Winkel wird in eine Richtung positiv gemessen, in der der Kurbelarm im Betrieb der Ballenpresse in deren Betriebsmodus rotiert. Typischerweise wird der Kurbelarm derart betrieben, dass er sich im Betriebsmodus der Ballenpresse entgegen dem Uhrzeigersinn um die Antriebsachse bewegt. Entsprechend wird der angegebene Winkel bei dieser Konstellation gleichfalls entgegen dem Uhrzeigersinn positiv gemessen.

Die beschriebene Ausrichtung der Längsachse des Kurbelarms bei Vorliegen der Antriebseinrichtung in ihrer Startposition hat den besonderen Vorteil, dass der Kurbelarm ausgehend von dieser Position fast eine vollständige Umdrehung ausführen muss, bevor die Längsachse des Kurbelarms parallel zu der positiven x-Achse des Koordinatensystems orientiert ist und mithin sich der Hauptverdichter in seiner maximal von der Antriebseinrichtung abgewandten Stellung befindet. In letztgenannter Stellung wirkt in aller Regel die maximale Presskraft auf das Material und folglich auch umgekehrt auf den Hauptverdichter. Die Ausführung fast einer vollständigen Umdrehung des Kurbelarms, bevor es zu der Wirkung dieser maximalen Presskraft kommt, ist entsprechend besonders zu bevorzugen, um den Hauptverdichter zuvor möglichst stark beschleunigen und somit die geforderte Presskraft aufbringen zu können. Auf diese Weise gelingt das Starten der Ballenpresse in aller Regel zuverlässig.

Das erfindungsgemäße Verfahren weiter ausgestaltend werden im Zuge der Inbetriebnahme der Ballenpresse, die mit der Ansteuerung der Antriebseinrichtung in ihrem Startmodus einhergeht, die folgenden Verfahrensschritte ausgeführt:
i) Es wird geprüft, ob die Antriebseinrichtung in ihrer Startposition vorliegt, wobei bei positivem Ergebnis der Startmodus beendet wird.
ii) Falls die Antriebseinrichtung nicht in ihrer Startposition vorliegt, wird die Antriebseinrichtung über die Dauer eines Zeitinkrements entgegen ihrem im Betriebsmodus der Ballenpresse vorliegenden Bewegungssinn betrieben.
iii) Es wird geprüft, ob die Antriebseinrichtung in ihrer Startposition vorliegt, wobei bei positivem Ergebnis der Startmodus beendet wird und bei negativem Ergebnis das Verfahren ab dem Verfahrensschritt ii) weiter betrieben wird.

Dieses Verfahren sieht einen standardisierten Ablauf des Startmodus vor, der unweigerlich dazu führt, dass die Antriebseinrichtung schließlich in ihrer Startposition vorliegt, wobei das Verfahren umso zügiger durchlaufen wird, desto näher sich die Antriebseinrichtung bereits vor Beginn des Startmodus an ihrer Startposition befindet. Das "Zeitinkrement", über das hinweg die Antriebseinrichtung entgegen ihrem in dem Betriebsmodus der Ballenpresse vorliegenden Bewegungssinn betrieben wird, kann beispielsweise 0,2 s bis 0,5 s betragen. Dabei versteht es sich, dass ein entsprechender Betrieb der Antriebseinrichtung mit einer Bewegung des Hauptverdichters entgegen seinem im Betriebsmodus der Ballenpresse vorliegenden Bewegungssinn korrespondiert. Das weitergebildete Verfahren sieht mithin vor, dass der Hauptverdichter ausgehend von einer beliebigen Stellung innerhalb des Hauptkanals im Zuge des Betriebs der Ballenpresse in ihrem Startmodus sukzessive entgegen seinem eigentlichen Bewegungssinn innerhalb des Hauptkanals bewegt wird, bis er in einer Startstellung vorliegt, die mit der Startposition der Antriebseinrichtung korrespondiert und von der ausgehend eine Inbetriebnahme der Ballenpresse zuverlässig möglich ist.

Die jeweilige Ballenpresse ist mit einem Energiespeichersystem gemäß der vorstehend beschriebenen Art ausgebildet und ist im Zuge des Betriebs der Ballenpresse in ihrem Startmodus zumindest anteilig, vorzugsweise vollständig, mittels des Energiespeichersystems mit Energie versorgt. Insbesondere ist es denkbar, dass die Überführung der Antriebseinrichtung in deren Startposition ausschließlich mittels einer elektrischen oder hydraulischen Maschine erfolgt, die unmittelbar auf die Antriebswelle wirkt und mittels eines zugehörigen Elektrospeichers bzw. Hydraulikspeichers mit Energie versorgt wird.

### Ausführungsbeispiele

Die erfindungsgemäße Ballenpresse sowie das erfindungsgemäße Verfahren werden nachstehend anhand von Ausführungsbeispielen, die in den Figuren dargestellt sind, näher erläutert. Es zeigt:
- Fig. 1:: Einen Querschnitt durch eine landwirtschaftliche Ballenpresse gemäß dem Stand der Technik,
- Fig. 2:: Eine schematische Darstellung eines Antriebsstrangs einer erfindungsgemäßen Ballenpresse, wobei sich die Antriebseinrichtung in einer beliebigen Position befindet,
- Fig. 3:: Eine schematische Darstellung des Antriebsstrang gemäß Figur 2, wobei sich die Antriebseinrichtung in ihrer Startposition befindet,
- Fig. 4:: Eine schematische Darstellung eines alternativen Antriebsstrangs einer erfindungsgemäßen Ballenpresse, die mit einem Nebenantrieb ausgestattet ist,
- Fig. 5:: Ein Flussdiagramm eines Startmodus gemäß einem erfindungsgemäßen Verfahren,
- Fig. 6:: Eine schematische Darstellung eines alternativen Antriebsstrangs einer erfindungsgemäßen Ballenpresse und
- Fig. 7:: Eine schematische Darstellung eines weiteren alternativen Antriebsstrangs einer erfindungsgemäßen Ballenpresse.

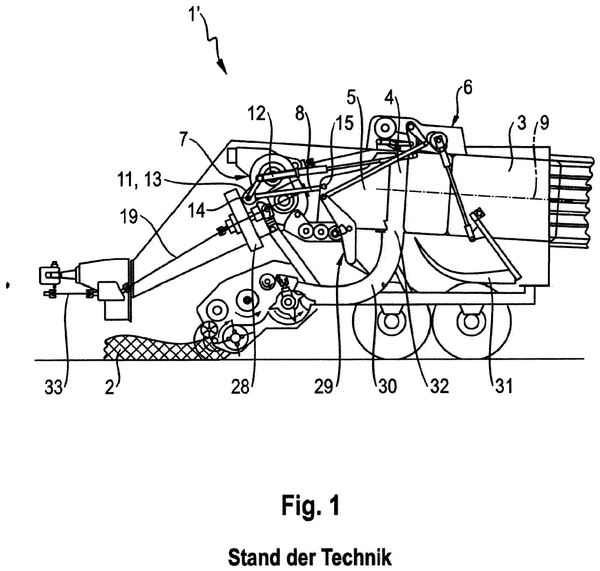

In **Figur 1** ist zunächst eine Ballenpresse **1**' gemäß dem Stand der Technik dargestellt. Diese Ballenpresse **1**' ist dazu geeignet, Material **2,** beispielsweise Stroh, von einem Untergrund aufzunehmen und zu einem Ballen **3** zu pressen. Hierzu wird das Material **2** insbesondere in einem Hauptkanal **4** mittels eines Verdichters **5** gepresst und mittels einer Bindeeinrichtung **6** zu dem Ballen **3** zusammengefasst. Die Ballenpresse **1**' verfügt über eine Antriebseinrichtung **7,** die dazu geeignet ist, die einzelnen Einrichtungen der Ballenpresse **1**' anzutreiben. Insbesondere wirkt die Antriebseinrichtung **7** mittels eines zugehörigen Kurbelarms **11** sowie einer Übertragungseinrichtung **8** mit dem Hauptverdichter **5** zusammen. Die Übertragungseinrichtung **8** ist hierzu sowohl an dem Hauptverdichter **5** mittels eines Drehgelenks **15** als auch mit dem Kurbelarm **11** mittels eines Drehgelenks **14** angeschlossen, sodass die Übertragungseinrichtung **8** als Pendelstab wirkt, der lediglich Normalkräfte übertragen kann. Der Kurbelarm **11** ist seinerseits an der übrigen Antriebseinrichtung **7** um eine Antriebsachse **12** drehantreibbar gelagert, wobei die Übertragungseinrichtung **8** an einem der Antriebsachse **12** abgewandten Ende **13** des Kurbelarms **11** angeschlossen ist. Diese Konstruktion führt insgesamt dazu, dass eine mittels der Antriebseinrichtung erzeugte Rotation des Kurbelarms **11** um die Antriebsachse **12** in eine oszillierende Hin-und-her-Bewegung des Hauptverdichters **5** in eine Richtung parallel zu einer Kanalachse **9** des Hauptkanals **4** übersetzt wird.

Die Antriebseinrichtung **7,** die hier von einer Getriebeeinrichtung gebildet ist, wird mittels einer landwirtschaftlichen Arbeitsmaschine, die in **Figur 1** nicht dargestellt ist, mit Energie versorgt. Hierzu ist die Ballenpresse **1**' mittels einer Abtriebswelle **33** mit einem nicht dargestellten Nebenabtrieb der landwirtschaftlichen Arbeitsmaschine verbunden, wobei ein von dem Nebenabtrieb abgenommenes Drehmoment mittels einer Antriebswelle **19** an die Antriebseinrichtung **7** übertragen wird. Ferner wirkt die Antriebseinrichtung **7** mit einem Schwungrad **28** zusammen, das mit der Antriebswelle **19** koppelbar oder gekoppelt ist. Insbesondere kann das Schwungrad **28** mit einer einfachen Kupplung ausgebildet sein, die es ermöglicht, dass das Schwungrad **28** eine höhere Rotationsgeschwindigkeit als die Antriebswelle **19** aufweist. Das Schwungrad **28** dient insbesondere dazu, eine Belastung der Antriebseinrichtung **7** an einem hinteren sowie einem vorderen Totpunkt des Hauptverdichters **5** zu überwinden und mithin die Antriebseinrichtung **7** mit einer ausreichenden Drehmomentreserve zu versorgen.

Neben dem Betrieb des Hauptverdichters **5** bewirkt die Antriebseinrichtung **7** ferner einen Betrieb eines Vorverdichters **29,** der dazu geeignet ist, das aufgenommene Material **2** innerhalb eines Vorkanals **30** zu raffen und schließlich durch einen Übertrittsquerschnitt **32** hindurch in den Hauptkanal **4** zu überführen. Weiterhin wird die Bindeeinrichtung **6** mittels der Antriebseinrichtung **7** angetrieben, wobei die Bindeeinrichtung **6** insbesondere Bindenadeln **31** umfasst, mittels derer eine Bindeschnur, die zur Einfassung der Ballen **3** geeignet ist, geführt werden kann. Hierzu schießen die Bindenadeln **31** nach Pressung von ausreichend viel Material **2** von einer Unterseite des Hauptkanals **4** her in den Hauptkanal **4** ein und übergeben die Bindeschnur an einer Oberseite des Hauptkanals **4** an einen Knoter, der die Bindeschnur entgegennimmt und derart mit sich selbst verknotet. Daraufhin ist eine gewisse Menge gepressten Materials **2** mittels der Bindeschnur zusammengefasst, wodurch letztlich ein Ballen **3** gebildet ist.

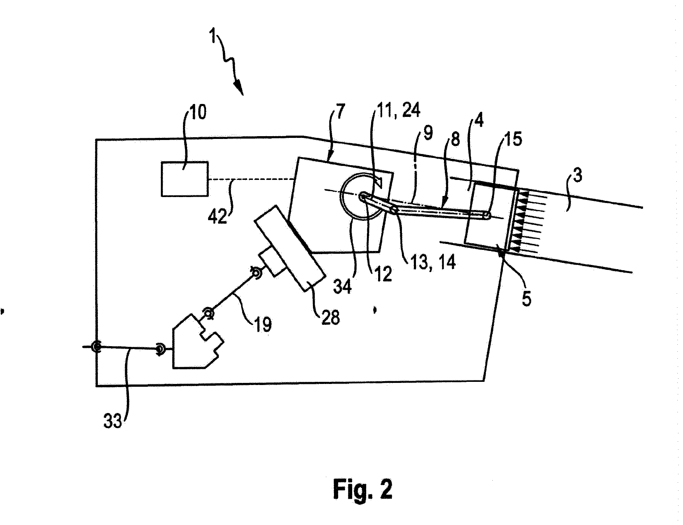

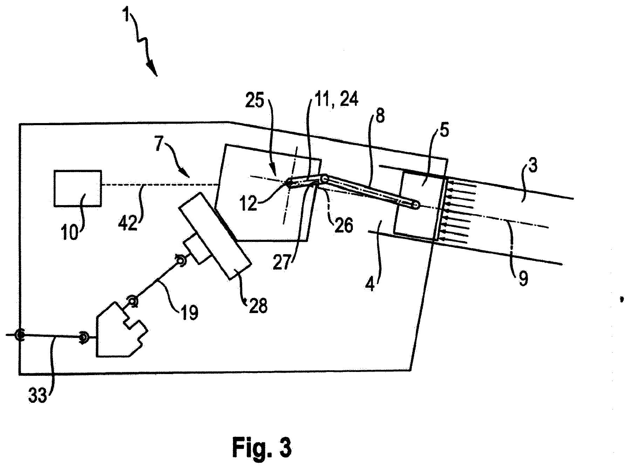

Ein erstes Ausführungsbeispiel einer erfindungsgemäßen Ballenpresse **1** ist nunmehr in den **Figuren 2** **und** **3** dargestellt. Die erfindungsgemäße Ballenpresse **1** unterscheidet sich von der an sich bekannten Ballenpresse **1**' durch eine Steuerungseinrichtung **10,** die dazu geeignet ist, die Ballenpresse **1** neben einem üblichen Betriebsmodus zusätzlich in einen Wartungsmodus sowie einem Startmodus zu betreiben. In dem gezeigten Beispiel wirkt die Steuerungseinrichtung **10** hierfür mittels einer Datenleitung **42** unmittelbar mit der Antriebseinrichtung **7** zusammen.

In dem Startmodus bewirkt die Steuerungseinrichtung **10** zunächst, dass die Antriebseinrichtung **7** in eine Startposition bringbar ist. Hierzu wird der Hauptverdichter **5** in einem gegenüber dem Betriebsmodus der Ballenpresse **1** entgegengesetzten Bewegungssinn innerhalb des Hauptkanals **4** bewegt. Diese Bewegung des Hauptverdichters **5** wird dadurch erzeugt, dass der Kurbelarm **11** im Uhrzeigersinn um seine Antriebsachse **12** rotiert wird. Dies ist in **Figur 2** mittels eines Pfeils **34** grafisch veranschaulicht. In einer in **Figur 2** dargestellten Option befindet sich der Hauptverdichter **5** unmittelbar vor seinem der Antriebseinrichtung **7** abgewandten Totpunkt, bei dessen Erreichen er derart mit dem zu pressenden Material **2** eingreift, dass eine maximale Presskraft ausgeübt werden muss. Ausgehend von dieser Position des Hauptverdichters **5** ist es besonders schwierig, die Ballenpresse **1** zu starten, der unmittelbar mit der Inbetriebnahme der Ballenpresse **1** bereits eine maximale Leistung an dem Hauptverdichter **5** anliegen muss um den beschriebenen Totpunkt zu überwinden. Daher wird die Ballenpresse **1** bei ihrer Inbetriebnahme zunächst in dem Startmodus betrieben, wobei die Steuerungseinrichtung **10** in der beschriebenen Weise auf die Antriebseinrichtung **7** einwirkt.

Dies hat schließlich zur Folge, dass der Hauptverdichter ausgehend von der in **Figur 2** gezeigten Position zunächst innerhalb des Hauptkanals **4** zurückgezogen und schließlich wieder vorgezogen wird, bis die Antriebseinrichtung **7** eine Startposition erreicht. Letztere ist in **Figur 3** beispielhaft dargestellt. In dieser Startposition befindet sich der Hauptverdichter **5** abermals in unmittelbarer Nähe zu seinem der Antriebseinrichtung **7** abgewandten Totpunkt, wobei jedoch bei Überführung der Ballenpresse **1** in ihren Betriebsmodus der Hauptverdichter **5** zunächst abermals zurückgezogen und dann vorgeschoben wird. Hierdurch wird genügend Zeit zur Verfügung gestellt, die Antriebseinrichtung **7** und insbesondere das Schwungrad **28** zu beschleunigen und auf diese Weise sicherzustellen, dass beim erstmaligen Erreichen des hinteren Totpunkts die auf den Hauptverdichter **5** einwirkende Presskraft aufgebracht und somit der Totpunkt überwunden werden können.

Die Startposition der Antriebseinrichtung **7** ist in dem gezeigten Beispiel unmittelbar von einer Stellung des Kurbelarms **11** relativ zu der Antriebsachse **12** abhängig. Um diese Stellung des Kurbelarms **11** zu beschreiben, wird ein gedachtes Koordinatensystem **25** in die Antriebsachse **12** gelegt, wobei sich die Antriebsachse **12** senkrecht den durch das Koordinatensystem **25** auf gespannten Quadranten erstreckt und eine positive x-Achse **26** parallel zu der Kanalachse **9** des Hauptkanals **4** orientiert ist. Bezogen auf dieses Koordinatensystem **25** ist bei Vorliegen der Antriebseinrichtung **7** in deren Startposition eine Längsachse **24** des Kurbelarms **11** derart positioniert, dass diese mit der positiven x-Achse **26** einen Winkel **27** von hier ca. 20° einschließt. Der Kurbelarm **11** ist mithin derart ausgerichtet, dass sich dessen Längsachse **24** nahe an der positiven x-Achse **26** befindet und mithin der Hauptverdichter **5** fast in seiner maximal von der Antriebseinrichtung **7** abgewandten Stellung vorliegt. Bei Überführung der Ballenpresse **1** in ihren Betriebsmodus stehen nun dem Kurbelarm **11** gewissermaßen 340° Rotation zur Verfügung, bevor die beschriebene maximale Presskraft auf den Hauptverdichter **5** wirkt.

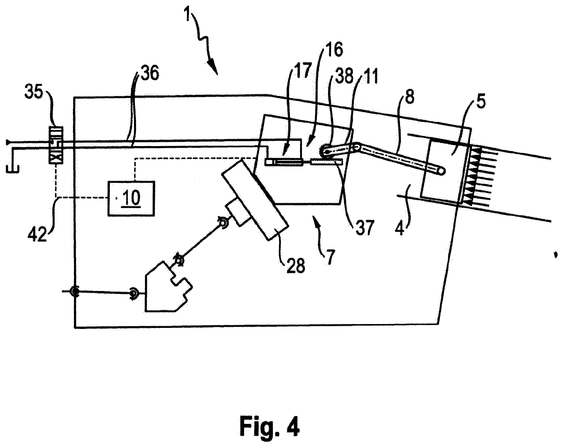

Alternativ zu der in den **Figuren 2** **und** **3** gezeigten Ausführungsform kann die Steuerungseinrichtung **10** auch in anderer Weise die Überführung der Antriebseinrichtung **7** in deren Startposition bewirken. Eine solche Alternative ist beispielhaft in **Figur 4** dargestellt. Die dort gezeigte Ballenpresse **1** verfügt zusätzlich zu der Antriebseinrichtung **7** über einen Nebenantrieb **16,** der eine Kolben-Zylinder-Einheiten **17** umfasst. Ein Kolben der letzteren wirkt hier mit einer Zahnschiene **37** zusammen, die an einer Oberseite mit Zähnen ausgebildet ist. Diese sind dazu geeignet, mit einem korrespondierenden Zahnrad **38** zu kämmen, das wiederum in unmittelbar Drehmoment übertragender Weise mit dem Kurbelarm **11** zusammenwirkt. Dies hat zur Folge, dass ein Ein- oder Ausfahren des Kolbens der Kolben-Zylinder-Einheit **10** in deren Zylinder bzw. aus dem Zylinder heraus eine Rotation des Kurbelarms **11** um dessen **12** zur Folge hat. Es versteht sich, dass folglich die Antriebseinrichtung **7** und insbesondere der Hauptverdichter **5** mithin auch auf diese Weise in eine gewünschte Startposition bringbar sind.

Der Nebenantrieb **16** wird hier beispielhaft hydraulisch betrieben, wobei Arbeitsräume der Kolben-Zylinder-Einheiten **17** mittels zugehöriger Hydraulikleitungen **26** an einen hydraulischen Antrieb einer externen landwirtschaftlichen Arbeitsmaschine anschließbar sind. Der Betrieb des Nebenantriebs **16** wird dabei mittels einer Ventileinrichtung **35** geregelt, deren verschiedene Stellungen wiederum mittels der erfindungsgemäßen Steuerungseinrichtung **10** gesteuert werden. Die Steuerungseinrichtung **10** ist hierzu mittels einer Datenleitung **42** der Ventileinrichtung **35** verbunden.

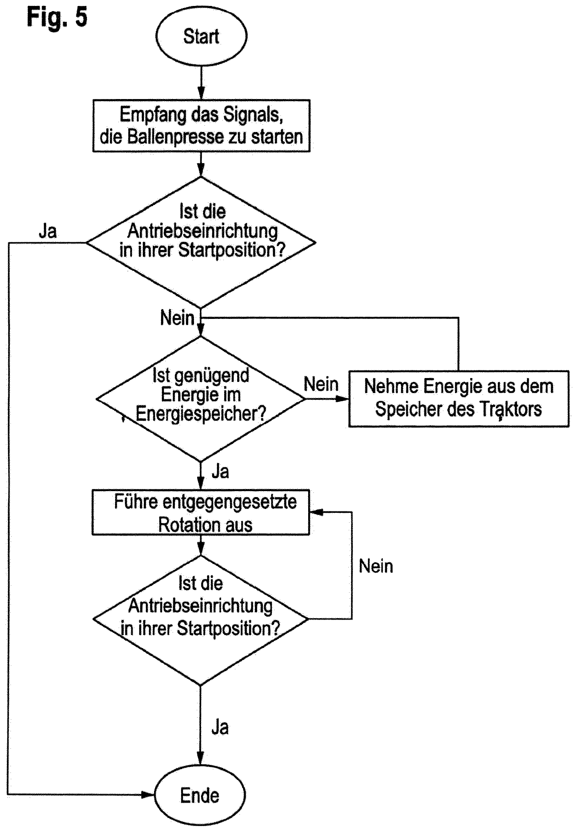

Unabhängig von der konkreten Ausgestaltung der Ballenpresse **1** bezogen auf die Art und Weise, mittels derer die Antriebseinrichtung **7** in dem Startmodus in ihre Startposition überführt werden kann, kann die erfindungsgemäße Ballenpresse **7** in ihrem Startmodus in jedem Fall einen bestimmten Ablauf durchlaufen, der in **Figur 5** in Form eines Flussdiagramms veranschaulicht ist. Dieser Ablauf sieht vor das zunächst bei der Inbetriebnahme der Ballenpresse **1** der Startmodus initiiert wird, wobei als erstes geprüft wird, ob sich die Antriebseinrichtung **7** in ihrer Startposition befindet. Diese Startposition kann sich insbesondere durch eine Position des Kurbelarms **11** der Antriebseinrichtung **7** ausdrücken, wobei dessen Position wiederum beispielsweise in der vorstehend beschriebenen Art anhand eines bestimmten Winkels **27** der Längsachse **24** des Kurbelarms **11** relativ zu einer x-Achse **26** eines Koordinatensystem **25** definiert sein kann. Alternative Definitionen sind selbstverständlich ebenso denkbar. Vorteilhafterweise wirkt die Antriebseinrichtung **7** mit mindestens einer in den Figuren nicht dargestellten Sensoreinheit zusammen, die eine Position des Kurbelarms **11** erfassen kann.

Sollte sich die Antriebseinrichtung **7** bereits (zufälligerweise) in ihrer Startposition befinden, kann der Startmodus der Ballenpresse **1** direkt beendet werden und die Ballenpresse **1** insbesondere in ihren Betriebsmodus überführt werden. Alternativ ist selbstverständlich ebenso eine Überführung in den Wartungsmodus denkbar.

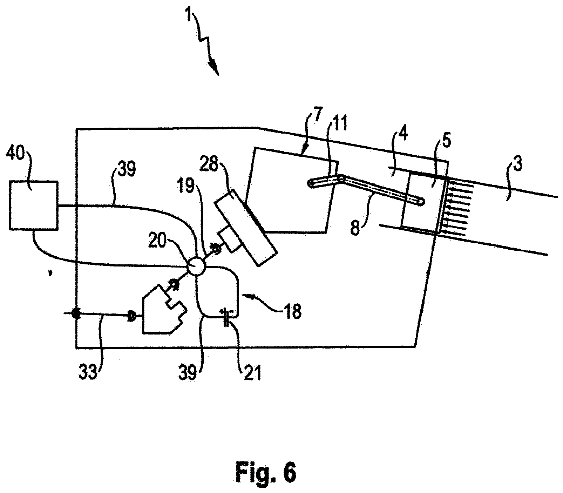

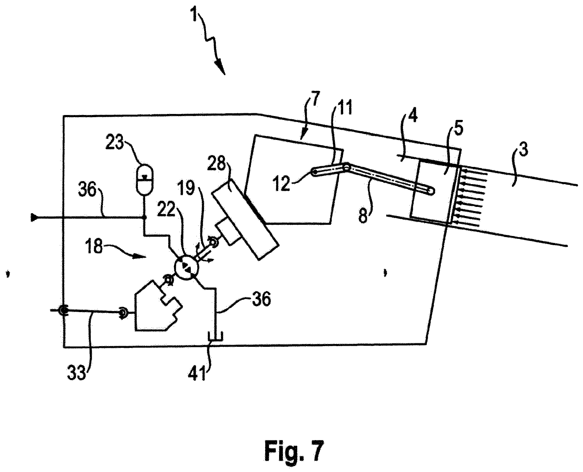

Sofern sich die Antriebseinrichtung **7** jedoch nicht in ihrer Startposition befindet, wirkt die Steuerungseinrichtung **10** darauf hin, dass die Antriebseinrichtung **7** in ihrer Startposition überführt wird, wobei diese insbesondere in einem zu dem Betriebsmodus der Ballenpresse **1** entgegengesetzten Bewegungssinn bewegt wird. Das in **Figur 5** dargestellte Flussdiagramm ist vor allem für eine Ballenpresse **1** geeignet, die mit einem in den **Figuren 6** **und** **7** dargestellten Energiespeichersystem **18** ausgestattet ist. Somit wird zunächst geprüft, ob ein Energiespeicher des Energiespeichersystems genügend Energie zur Verfügung stellen kann, um diese Bewegung der Antriebseinrichtung **7** zu bewirken. Sollte dem nicht der Fall sein, wird Energie aus einer externen Energiequelle, insbesondere einer landwirtschaftlichen Arbeitsmaschine, entnommen. Schließlich wird die Antriebseinrichtung **7** in dem der normalen Bewegung entgegengesetzt Bewegungssinn so oft wiederholt bewegt, bis die Antriebseinrichtung **7** schließlich in ihrer Startposition vorliegt. Hierzu findet wiederholt eine inkrementelle Bewegung der Antriebseinrichtung **7** mit anschließender Prüfung Ihrer jeweils aktuellen Position statt. Sobald die Startposition erreicht ist, wird der Startmodus beendet.

Weiterhin ist die erfindungsgemäße Ballenpresse **1** dazu geeignet, mittels der Steuerungseinrichtung **10** in einem Wartungsmodus betrieben zu werden. Hierbei werden die einzelnen Einrichtungen der Ballenpresse **1,** insbesondere der Hauptverdichter **5,** mit einer gegenüber dem Betriebsmodus der Ballenpresse **1** reduzierten Wartungsgeschwindigkeit betrieben. In dem gezeigten Beispiel ist der Wartungsmodus derart ausgebildet, dass die Wartungsgeschwindigkeit ca. 30 % der in Betriebsmodus üblichen Betriebsgeschwindigkeit beträgt. Der Betrieb der Ballenpresse **1** in ihrem Wartungsmodus hat den besonderen Vorteil, dass eine optische Inspektion der einzelnen Einrichtungen sowie des Arbeitsablaufs der Ballenpresse **1** beobachtbar sind. Dies gilt insbesondere für die Arbeit des Hauptverdichters **5,** der bei Vorliegen der Ballenpresse **1** in ihren Betriebsmodus in aller Regel sich vergleichsweise schnell innerhalb des Hauptkanals **4** bewegt, sodass eine optische Inspektion schwierig ist. Dies gilt umso mehr für die Bindenadeln **31,** die im Betriebsmodus der Ballenpresse **1** Streben hoher Geschwindigkeit in den Hauptkanal **4** einschließt. Die demgegenüber reduzierten Wartungsgeschwindigkeit ermöglicht mithin auch eine Inspektion und Kontrolle beispielsweise der Bindenadeln **31.**

Wie vorstehend bereits angedeutet, kann die erfindungsgemäße Ballenpresse **1** vorteilhafterweise mit einem Energiespeichersystem **18** ausgestattet sein, das zur Speicherung überschüssiger Energie sowie zur späteren Verwendung dieser Energie zum Betrieb der Antriebseinrichtung **7** geeignet ist. In einem ersten Ausführungsbeispiel, das ein solches Energiespeichersystem **18** umfasst und in **Figur 6** dargestellt ist, verfügt die Ballenpresse **1** über eine elektrische Maschine **20,** die unmittelbar mit der Antriebswelle **19** zusammenwirkt. Die elektrische Maschine **20** ist mittels Elektroleitungen **39** mit einem Elektrospeicher **21** verbunden, der hier in Form einer Batterie ausgebildet ist. Weiterhin ist die elektrische Maschine **20** mittels weiterer Elektroleitungen **39** mit einem externen Elektrospeicher **40** verbunden, der insbesondere zu einer landwirtschaftlichen Arbeitsmaschine gehören kann. Die elektrische Maschine **20** ist hier in Form einer Synchronmaschine ausgebildet, die sowohl als Generator als auch als Motor wirken kann. Auf diese Weise ist sie dazu geeignet, etwaige Rotationsenergie der Antriebswelle **19** sowie des damit verbundenen Schwungrades **28,** die beispielsweise in Zuge einer Außerbetriebnahme der Ballenpresse **1** noch vorhanden ist, von der Abtriebswellen **19** zu nehmen und in den Elektrospeicher **21** einzuspeisen. Beispielsweise ist es denkbar, dass die Ballenpresse **1** bei einem Wechsel von einem fertig bearbeitenden Feld zu einem anderen Feld temporär abgeschaltet wird.

Die gespeicherte Energie kann sodann bei der nächsten Inbetriebnahme der Ballenpresse **1** ausgehend von dem Elektrospeicher **21** der elektrischen Maschine **20** zur Verfügung gestellt werden, sodass letztere als Motor genutzt wird. Als solcher kann die elektrische Maschine **20** die zur Verfügung gestellte elektrische Energie in Rotationsenergie umwandeln und diese auf die Antriebswelle **19** übertragen. Somit ist es insbesondere denkbar, die Antriebseinrichtung **7** im Zuge des Betriebs der Ballenpresse **1** in ihrem Startmodus zumindest anteilig, vorzugsweise ausschließlich, mittels der elektrischen Maschine **20** des Energiespeichersystems **18** zu betreiben. Die Abnahme von Energie beispielsweise von einem Nebenabtrieb einer jeweiligen landwirtschaftlichen Arbeitsmaschine kann sodann entfallen. Die optionale Koppelung der elektrischen Maschine **20** mit einem externen Elektrospeicher **40** kann ferner dazu genutzt werden, die elektrische Maschine **20** in jedem Fall in ihrer Funktion als Motor zu verwenden, selbst wenn der Elektrospeicher **21** leer sein sollte.

Alternativ zu der Ausgestaltung des Energiespeichersystems **18** in der in **Figur 6** dargestellten Weise ist auch ein hydraulisches System denkbar, das über eine hydraulische Maschine **22** sowie einen Hydraulikspeicher **23** verfügt. Die Betriebsweise dieses Energiespeichersystems **18** kann analog zu demjenigen der vorstehend beschriebenen Art erfolgen, wobei die Speicherung von hydraulischer Energie beispielsweise dadurch erfolgen kann, dass ein jeweiliges Hydraulikfluid ausgehend von einem niedrig gelegenen Tank **41** mittels einer Hydraulikleitung **36** in einen höher gelegenen Hydraulikspeicher **23** gepumpt wird. Die hydraulischen Maschine **22** wirkt in dieser Situation mithin als Pumpe. Umgekehrt kann sie gleichermaßen als Motor werden, wobei die in dem Hydraulikspeicher **23** gespeicherte Energie zum Antrieb der hydraulischen Maschine **22** genutzt wird, sodass letztere ein Drehmoment auf die Antriebsachse **19** ausüben kann.

### Bezugszeichenliste

- 1: Ballenpresse
- 2: Material
- 3: Ballen
- 4: Hauptkanal
- 5: Hauptverdichter
- 6: Bindeeinrichtung
- 7: Antriebseinrichtung
- 8: Übertragungseinrichtung
- 9: Kanalachse
- 10: Steuerungseinrichtung
- 11: Kurbelarm
- 12: Antriebsachse
- 13: Ende des Kurbelarms
- 14: Drehgelenk
- 15: Drehgelenk
- 16: Nebenantrieb
- 17: Kolben-Zylinder-Einheit
- 18: Energiespeichersystem
- 19: Antriebswelle
- 20: elektrische Maschine
- 21: Elektrospeicher
- 22: hydraulische Maschine
- 23: Hydraulikspeicher
- 24: Längsachse des Kurbelarms
- 25: Koordinatensystem
- 26: positive x-Achse
- 27: Winkel
- 28: Schwungrad
- 29: Vorverdichter
- 30: Vorkanal
- 31: Bindenadel
- 32: Übertrittsquerschnitt
- 33: Abtriebswelle
- 34: Pfeil
- 35: Ventileinrichtung
- 36: Hydraulikleitung
- 37: Zahnschiene
- 38: Zahnrad
- 39: Elektroleitung
- 40: Elektrospeicher
- 41: Tank

## Patentansprüche

1. Landwirtschaftliche Ballenpresse (1) zum Pressen von Material (2) zu quaderförmigen Ballen (3), insbesondere zum Pressen von Strohballen, umfassend
- einen Hauptkanal (4),
- mindestens einen Hauptverdichter (5),
- mindestens eine Bindeeinrichtung (6),
- mindestens eine Antriebseinrichtung (7) sowie
- mindestens eine Übertragungseinrichtung (8),
wobei der Hauptverdichter (5) mittels der Übertragungseinrichtung (8) mit der Antriebseinrichtung (7) zusammenwirkt, sodass der Hauptverdichter (5) innerhalb des Hauptkanals (4) parallel zu einer Kanalachse (9) des Hauptkanals (4) oszillierend hin und her bewegbar ist und auf diese Weise in dem Hauptkanal (4) befindliches Material (2) sukzessive pressbar ist,
wobei mittels der Bindeeinrichtung (6) innerhalb des Hauptkanals (4) befindliches, gepresstes Material (2) abschnittsweise derart zusammenfassbar ist, dass ein jeweiliger Ballen (3) gebildet wird,
**gekennzeichnet durch**
eine Steuerungseinrichtung (10), mittels derer die Ballenpresse (1) zusätzlich zu einem Betriebsmodus, in dem das jeweilige Material (2) zu dem Ballen (3) pressbar ist, zusätzlich in einem Wartungsmodus und einem Startmodus betreibbar ist,
wobei bei Betrieb der Ballenpresse (1) in dem Wartungsmodus zumindest der Hauptverdichter (5) mit einer Wartungsgeschwindigkeit bewegbar ist, die gegenüber einer in dem Betriebsmodus verwendeten Betriebsgeschwindigkeit reduziert ist, und
wobei bei Betrieb der Ballenpresse (1) in dem Startmodus zumindest der Hauptverdichter (5) in einem gegenüber dem Betriebsmodus entgegengesetzten Bewegungssinn bewegbar ist und wobei
die Ballenpresse (1) mindestens ein Energiespeichersystem (18) umfasst, das mit einer Antriebswelle (19) der Antriebseinrichtung (7) zusammenwirkt, wobei mittels des Energiespeichersystems (18) Bremsenergie im Zuge einer Bremsung der Antriebswelle (19) speicherbar und Beschleunigungsenergie im Zuge einer Beschleunigung der Antriebswelle (19) auf die Antriebswelle (19) übertragbar ist und
die Antriebseinrichtung (7) zumindest im Zuge des Betriebs der Ballenpresse (1) in ihrem Startmodus zumindest anteilig mittels des Energiespeichersystems (18) mit Energie versorgt wird.

2. Ballenpresse (1) nach Anspruch 1, **dadurch gekennzeichnet, dass** die Antriebseinrichtung (7) mindestens einen Kurbelarm (11) aufweist, der um eine zu der Kanalachse (9) des Hauptkanals (5) senkrechte Antriebsachse (12) drehantreibbar ist, wobei der Kurbelarm (11) an einem von der Antriebsachse (12) radial beabstandeten Ende (13) unter Ausbildung eines Drehgelenks (14) mit der Übertragungseinrichtung (8) zusammenwirkt, die wiederum unter Ausbildung eines Drehgelenks (15) mit dem Hauptverdichter (5) zusammenwirkt, sodass eine Rotation des Kurbelarms (11) um die Antriebsachse (12) die oszillierende Bewegung des Hauptverdichters (5) bewirken kann.

3. Ballenpresse (1) nach Anspruch 1 oder 2, **gekennzeichnet durch** einen Nebenantrieb (16), der dazu geeignet ist, derart zumindest mittelbar, vorzugsweise unmittelbar, auf den Hauptverdichter (5) einzuwirken, dass dieser in dem gegenüber dem Betriebsmodus entgegengesetzten Bewegungssinn innerhalb des Hauptkanals (4) bewegbar ist.

4. Ballenpresse (1) nach Anspruch 3, **dadurch gekennzeichnet, dass** der Nebenantrieb (16) eine Kolben-Zylinder-Einheit (17) umfasst, die vorzugsweise unmittelbar mit einem Kurbelarm (11) der Antriebseinrichtung (7) zusammenwirkt, sodass eine Betätigung der Kolben-Zylinder-Einheit (17) zu einer Rotation des Kurbelarms (11) um dessen Antriebsachse (12) führt.

5. Ballenpresse (1) nach Anspruch 1, **dadurch gekennzeichnet, dass** das Energiespeichersystem (18) eine elektrische Maschine (20) sowie einen Elektrospeicher (21) umfasst, wobei die elektrische Maschine (20) mit der Antriebswelle (19) gekoppelt oder koppelbar ist, sodass sie dazu geeignet ist, bei Vorliegen in einem Generatorbetrieb Rotationsenergie der Antriebswelle (19) in elektrische Energie umzuwandeln und in dem Elektrospeicher (21) zu speichern und bei Vorliegen in einem Motorbetrieb von dem Elektrospeicher (21) zur Verfügung gestellte elektrische Energie in Rotationsenergie umzuwandeln und auf die Antriebswelle (19) zu übertragen.

6. Ballenpresse (1) nach Anspruch 1, **dadurch gekennzeichnet, dass** das Energiespeichersystem (18) eine hydraulische Maschine (22) sowie einen Hydraulikspeicher (23) umfasst, wobei die hydraulische Maschine (22) mit der Antriebswelle (19) gekoppelt oder koppelbar ist, sodass sie dazu geeignet ist, bei Vorliegen in einem Pumpbetrieb Rotationsenergie der Antriebswelle (19) in hydraulische Energie umzuwandeln und in dem Hydraulikspeicher (23) zu speichern und bei Vorliegen in einem Motorbetrieb von dem Hydraulikspeicher (23) zur Verfügung gestellte hydraulische Energie in Rotationsenergie umzuwandeln und auf die Antriebswelle (19) zu übertragen.

7. Verfahren zum Betrieb einer Ballenpresse (1) nach einem der Ansprüche 1 bis 6, umfassend die folgenden Verfahrensschritte:
a) zu pressendes Material (2) wird dem Hauptkanal (4) zugeführt,
b) in dem Hauptkanal (4) wird das Material (2) mittels des Hauptverdichters (5) verdichtet, wobei der Hauptverdichter (5) innerhalb des Hauptkanals (4) parallel zu einer Kanalachse (9) des Hauptkanals (4) oszillierend hin und her bewegt wird,
c) gepresstes Material (2) wird unter Verwendung einer Bindeeinrichtung (6) zusammengefasst, sodass das gepresste Material (2) einen Ballen (3) bildet,
**gekennzeichnet durch** die folgenden Verfahrensschritte:
d) in einem Wartungsmodus wird die Ballenpresse (1) derart mittels der Steuerungseinrichtung (10) gesteuert, dass zumindest der Hauptverdichter (5) mit einer Wartungsgeschwindigkeit betrieben wird, die gegenüber einer in einem Betriebsmodus verwendeten Betriebsgeschwindigkeit reduziert ist,
e) in einem Startmodus wird die Ballenpresse (1) derart mittels der Steuerungseinrichtung (10) gesteuert, dass die Antriebseinrichtung (7) in einem gegenüber dem Betriebsmodus entgegengesetzten Bewegungssinn bewegt wird, bis die Antriebseinrichtung (7) eine Startposition einnimmt, wobei
f) die Ballenpresse (1) mindestens ein Energiespeichersystem (18) umfasst, das mit einer Antriebswelle (19) der Antriebseinrichtung (7) zusammenwirkt, wobei mittels des Energiespeichersystems (18) Bremsenergie im Zuge einer Bremsung der Antriebswelle (19) speicherbar und Beschleunigungsenergie im Zuge einer Beschleunigung der Antriebswelle (19) auf die Antriebswelle (19) übertragbar ist und
g) die Antriebseinrichtung (7) zumindest im Zuge des Betriebs der Ballenpresse (1) in ihrem Startmodus zumindest anteilig mittels des Energiespeichersystems (18) mit Energie versorgt wird.

8. Verfahren nach Anspruch 7 , **dadurch gekennzeichnet, dass** die Wartungsgeschwindigkeit höchstens 50 %, vorzugsweise höchstens 40 %, weiter vorzugsweise höchstens 30 %, der Betriebsgeschwindigkeit beträgt.

9. Verfahren nach Anspruch 7 oder 8, **dadurch gekennzeichnet, dass** der Hauptverdichter (5) ausgehend von einer Startposition der Antriebseinrichtung (7) sowie im Zuge der Überführung der Ballenpresse (1) von ihrem Startmodus in ihren Betriebsmodus innerhalb des Hauptkanals (4) in eine der Antriebseinrichtung (7) zugewandte Richtung bewegt wird.

10. Verfahren nach einem der Ansprüche 7 bis 9, wobei die Antriebseinrichtung (7) mindestens einen Kurbelarm (11) aufweist, der um eine zu der Kanalachse (9) des Hauptkanals (4) senkrechte Antriebsachse (12) drehantreibbar ist, wobei der Kurbelarm (11) an einem von der Antriebsachse (12) radial beabstandeten Ende (13) unter Ausbildung eines Drehgelenks (14) mit der Übertragungseinrichtung (8) zusammenwirkt, die wiederum unter Ausbildung eines Drehgelenks (15) mit dem Hauptverdichter (5) zusammenwirkt, sodass eine Rotation des Kurbelarms (11) um die Antriebsachse (12) die oszillierende Bewegung des Hauptverdichters (5) bewirken kann, **dadurch gekennzeichnet, dass** der Startmodus derart ausgeführt wird, dass eine Längsachse (24) des Kurbelarms (11) bei Vorliegen der Antriebseinrichtung (7) in deren Startposition - relativ zu einem in die Antriebsachse (12) gelegten Koordinatensystems (25) - mit der positiven x-Achse (26) des Koordinatensystems (25) einen Winkel (27) zwischen 5° und 40°, vorzugsweise zwischen 10° und 30°, weiter vorzugsweise einen Winkel von 20°, einschließt, wobei der Winkel (27) in Richtung eines in dem Betriebsmodus der Ballenpresse (1) vorliegenden Rotationssinns des Kurbelarms (11) gemessen wird.

11. Verfahren nach einem der Ansprüche 7 bis 10, **dadurch gekennzeichnet, dass** im Zuge einer Inbetriebnahme der Ballenpresse (1) selbige zunächst in ihrem Startmodus betrieben wird, wobei innerhalb des Startmodus die folgenden Verfahrensschritte ausgeführt werden:
i) Es wird geprüft, ob die Antriebseinrichtung (7) in ihrer Startposition vorliegt, wobei bei positivem Ergebnis der Startmodus beendet wird.
ii) Falls die Antriebseinrichtung (7) nicht in ihrer Startposition vorliegt, wird die Antriebseinrichtung (7) über die Dauer eines Zeitinkrements entgegen ihrem im Betriebsmodus der Ballenpresse (1) vorliegenden Bewegungssinn betrieben.
iii) Es wird geprüft, ob die Antriebseinrichtung (7) in ihrer Startposition vorliegt, wobei bei positivem Ergebnis der Startmodus beendet wird und bei negativem Ergebnis das Verfahren ab dem Verfahrensschritt ii) weiter betrieben wird.

## Claims

1. An agricultural baler (1) for compressing material (2) into square bales (3), in particular for compressing straw bales, comprising
- a main channel (4),
- at least one main compactor (5),
- at least one binding device (6),
- at least one drive device (7), as well as
- at least one transmission device (8),
wherein the main compactor (5) cooperates with the drive device (7) by means of the transmission device (8), so that the main compactor (5) can oscillate backwards and forwards within the main channel (4) parallel to a channel axis (9) of the main channel (4) and in this manner, material (2) located in the main channel (4) can be successively compressed, wherein, by means of the binding device (6), compressed material (2) located within the main channel (4) can be accumulated portion by portion so that a respective bale (3) is formed,
**characterized by**
a control device (10) by means of which, in addition to an operational mode in which the respective material (2) can be compressed into the bale (3), the baler (1) can additionally be operated in a maintenance mode and a start-up mode,
wherein, when the baler (1) is operated in the maintenance mode, at least the main compactor (5) can be moved at a maintenance speed which is reduced with respect to an operating speed used in the operational mode, and
wherein, when the baler (1) is operated in the start-up mode, at least the main compactor (5) can be moved in a direction of movement which is opposite to that of the operational mode, and wherein
the baler (1) comprises at least one energy storage system (18) which cooperates with a drive shaft (19) of the drive device (7) wherein, by means of the energy storage system (18), braking energy can be stored during the course of braking of the drive shaft (19) and acceleration energy can be transmitted to the drive shaft (19) during the course of an acceleration of the drive shaft (19), and
at least during the course of the operation of the baler (1) in its start-up mode, at least some of the energy for the drive device (7) is supplied by means of the energy storage system (18).

2. The baler (1) according to claim 1, **characterized in that** the drive device (7) has at least one crank arm (11) which can be driven in rotation about a drive axis (12) which is perpendicular to the channel axis (9) of the main channel (4), wherein the crank arm (11) cooperates with the transmission device (8) at an end (13) which is radially distant from the drive axis (12), with the formation of a swivel joint (14), which transmission device in turn cooperates with the main compactor (5), with the formation of a swivel joint (15), so that a rotation of the crank arm (11) about the drive axis (12) can produce the oscillating movement of the main compactor (5).

3. The baler (1) according to claim 1 or claim 2, **characterized by** an auxiliary drive (16) which is suitable for acting at least indirectly, preferably directly, on the main compactor (5) such that it can be moved within the main channel (4) in the direction of movement which is opposite to that of the operational mode.

4. The baler (1) according to claim 3, **characterized in that** the auxiliary drive (16) comprises a piston and cylinder unit (17) which preferably cooperates directly with a crank arm (11) of the drive device (7) so that an actuation of the piston and cylinder unit (17) results in a rotation of the crank arm (11) about its drive axis (12).

5. The baler (1) according to claim 1, **characterized in that** the energy storage system (18) comprises an electrical machine (20) as well as an electric storage device (21), wherein the electrical machine (20) is coupled to or can be coupled to the drive shaft (19) so that it is capable, when in a generator mode, of converting rotational energy of the drive shaft (19) into electrical energy and of storing it in the electric storage device (21), and when in a motor mode, it is capable of converting electrical energy provided by the electric storage device (21) into rotational energy and of transmitting it to the drive shaft (19).

6. The baler (1) according to claim 1, **characterized in that** the energy storage system (18) comprises a hydraulic machine (22) as well as a hydraulic storage device (23), wherein the hydraulic machine (22) is coupled to or can be coupled to the drive shaft (19) so that it is capable, when in a pumping mode, of converting rotational energy of the drive shaft (19) into hydraulic energy and of storing it in the hydraulic storage device (23), and when in a motor mode, it is capable of converting hydraulic energy provided by the hydraulic storage device (23) into rotational energy and of transmitting it to the drive shaft (19).

7. A method for operating a baler (1) according to one of claims 1 to 6, comprising the following steps of the method:
a) supplying material (2) to be compressed to the main channel (4),
b) compacting the material (2) in the main channel (4) by means of the main compactor (5), wherein the main compactor (5) is oscillated forwards and backwards within the main channel (4) parallel to a channel axis (9) of the main channel (4),
c) accumulating compressed material (2) using a binding device (6) so that the compressed material (2) forms a bale (3),
**characterized by** the following steps of the method:
d) in a maintenance mode, controlling the baler (1) by means of the control device (10) in a manner such that at least the main compactor (5) is operated at a maintenance speed which is reduced with respect to an operational speed used in an operational mode,
e) in a start-up mode, controlling the baler (1) by means of the control device (10) in a manner such that the drive device (7) is moved in a direction of movement which is opposite to that of the operational mode until the drive device (7) takes up a start-up position, wherein
f) the baler (1) comprises at least one energy storage system (18) which cooperates with a drive shaft (19) of the drive device (7), wherein by means of the energy storage system (18), braking energy can be stored during the course of braking of the drive shaft (19) and acceleration energy can be transmitted to the drive shaft (19) during the course of an acceleration of the drive shaft (19), and
g) at least during the course of the operation of the baler (1) in its start-up mode, at least some of the energy for the drive device (7) is supplied by means of the energy storage system (18).

8. The method according to claim 7, **characterized in that** the maintenance speed is at most 50%, preferably at most 40%, more preferably at most 30% of the operational speed.

9. The method according to claim 7 or claim 8, **characterized in that** starting from a start-up position of the drive device (7) as well as during the course of transferring the baler (1) from its start-up mode into its operational mode, the main compactor (5) is moved within the main channel (4) in a direction which is towards the drive device (7).

10. The method according to one of claims 7 to 9, wherein the drive device (7) has at least one crank arm (11) which can be driven in rotation about a drive axis (12) which is perpendicular to the channel axis (9) of the main channel (4), wherein the crank arm (11) cooperates with the transmission device (8) at an end (13) which is radially distant from the drive axis (12), with the formation of a swivel joint (14), which transmission device in turn cooperates with the main compactor (5), with the formation of a swivel joint (15), so that a rotation of the crank arm (11) about the drive axis (12) can produce the oscillating movement of the main compactor (5), **characterized in that** the start-up mode is configured in a manner such that when the drive device (7) is in its start-up position, a longitudinal axis (24) of the crank arm (11) encloses an angle (27) - relative to a coordinate system (25) centred on the drive axis (12) - with a positive x axis (26) of the coordinate system of between 5° and 40°, preferably between 10° and 30°, more preferably an angle of 20°, wherein the angle (27) is measured in the direction of rotation of the crank arm (11) when the baler (1) is in the operational mode.

11. The method according to one of claims 7 to 10, **characterized in that** during the course of operation of the baler (1), it is initially operated in its start-up mode, wherein within the start-up mode, the following steps of the method are carried out:
i) a test as to whether the drive device (7) is in its start-up position, whereupon if the result is positive, the start-up mode is ended,
ii) if the drive device (7) is not in its start-up position, the drive device (7) is operated in the direction of movement which is opposite to that of the direction of movement of the baler (1) in the operational mode for the duration of an increment of time,
iii) a test as to whether the drive device (7) is in its start-up position, whereupon if the result is positive, the start-up mode is ended and if the result is negative, the method is continued from step ii) of the method.

## Revendications

1. Presse à balles agricole (1) pour presser du matériau (2) en balles parallélépipédiques (3), en particulier pour presser des balles de paille, incluant
- un canal principal (4),
- au moins un compacteur principal (5),
- au moins un équipement de liage (6),
- au moins un équipement d'entraînement (7) ainsi que
- au moins un équipement de transmission (8),
le compacteur principal (5) coopérant par l'intermédiaire de l'équipement de transmission (8) avec l'équipement d'entraînement (7), de sorte que le compacteur principal (5) puisse de déplacer en va-et-vient de façon oscillante à l'intérieur du canal principal (4) parallèlement à un axe de canal (9) du canal principal (4) et que du matériau (2) se trouvant dans le canal principal (4) puisse ainsi être successivement pressé,
du matériau pressé (2) se trouvant à l'intérieur du canal principal (4) pouvant être regroupé par portions au moyen de l'équipement de liage (6) de façon à former une balle respective (3), **caractérisée par** un équipement de commande (10) au moyen duquel, en plus d'un mode de fonctionnement dans lequel le matériau respectif (2) est pressable en balle (3), la presse à balles (1) peut être exploitée dans un mode d'entretien et dans un mode de démarrage,
lors du fonctionnement de la presse à balles (1) en mode d'entretien, au moins le compacteur principal (5) pouvant être déplacé à une vitesse d'entretien qui est réduite par rapport à une vitesse de fonctionnement utilisée dans le mode de fonctionnement, et
lors du fonctionnement de la presse à balles (1) en mode de démarrage, au moins le compacteur principal (5) pouvant être déplacé dans un sens de déplacement opposé à celui du mode de fonctionnement, et
la presse à balles (1) incluant au moins un système d'accumulation d'énergie (18) qui coopère avec un arbre d'entraînement (19) de l'équipement d'entraînement (7), de l'énergie de freinage pouvant, au moyen du système d'accumulation d'énergie (18), être accumulée au cours d'un freinage de l'arbre d'entraînement (19) et
de l'énergie d'accélération pouvant être transmise à l'arbre d'entraînement (19) au cours d'une accélération de l'arbre d'entraînement (19) et
l'équipement d'entraînement (7) étant alimenté en énergie au moins proportionnellement au moyen du système d'accumulation d'énergie (18) au moins au cours du fonctionnement de la presse à balles (1) en mode de démarrage.

2. Presse à balles (1) selon la revendication 1, **caractérisée en ce que** l'équipement d'entraînement (7) comporte au moins une manivelle (11) qui est entraînable en rotation autour d'un axe d'entraînement (12) perpendiculaire à l'axe de canal (9) du canal principal (5), la manivelle (11) coopérant à une extrémité (13) distante radialement de l'axe d'entraînement (12), en formant une articulation tournante (14), avec l'équipement de transmission (8) qui coopère à son tour avec le compacteur principal (5) en formant une articulation tournante (15), de sorte qu'une rotation de la manivelle (11) autour de l'axe d'entraînement (12) peut provoquer le mouvement oscillant du compacteur principal (5).

3. Presse à balles (1) selon la revendication 1 ou 2, **caractérisée par** un moyen d'entraînement auxiliaire (16) qui est apte à agir au moins indirectement, de préférence directement, sur le compacteur principal (5), de façon que celui-ci puisse se déplacer à l'intérieur du canal principal (4) dans le sens de déplacement opposé à celui du mode de fonctionnement.

4. Presse à balles (1) selon la revendication 3, **caractérisée en ce que** le moyen d'entraînement auxiliaire (16) inclut une unité piston-cylindre (17) qui coopère de préférence directement avec une manivelle (11) de l'équipement d'entraînement (7), de façon qu'un actionnement de l'unité piston-cylindre (17) provoque une rotation de la manivelle (11) autour de son axe d'entraînement (12) .

5. Presse à balles (1) selon la revendication 1, **caractérisée en ce que** le système d'accumulation d'énergie (18) inclut une machine électrique (20) ainsi qu'un accumulateur électrique (21), la machine électrique (20) étant couplée ou couplable à l'arbre d'entraînement (19), de sorte qu'elle est apte, en présence d'un fonctionnement en générateur, de transformer de l'énergie de rotation de l'arbre d'entraînement (19) en énergie électrique et de l'accumuler dans l'accumulateur électrique (21) et, en présence d'un fonctionnement en moteur, de transformer de l'énergie électrique fournie par l'accumulateur électrique (21) en énergie de rotation et de la transmettre à l'arbre d'entraînement (19).

6. Presse à balles (1) selon la revendication 1, **caractérisée en ce que** le système d'accumulation d'énergie (18) inclut une machine hydraulique (22) ainsi qu'un accumulateur hydraulique (23), la machine hydraulique (22) étant couplée ou couplable à l'arbre d'entraînement (19), de sorte qu'elle est apte, en présence d'un fonctionnement en pompe, à transformer de l'énergie de rotation de l'arbre d'entraînement (19) en énergie hydraulique et à l'accumuler dans un accumulateur hydraulique (23) et, en présence d'un fonctionnement en moteur, à transformer de l'énergie hydraulique fournie par l'accumulateur hydraulique (23) en énergie de rotation et à la transmettre à l'arbre d'entraînement (19).

7. Procédé de fonctionnement d'une presse à balles (1) selon une des revendications 1 à 6, incluant les étapes de procédé suivantes :
a) du matériau à presser (2) est amené au canal principal (4),
b) dans le canal principal (4), le matériau (2) est compacté au moyen du compacteur principal (5), le compacteur principal (5) étant déplacé en va-et-vient de façon oscillante à l'intérieur du canal principal (4) parallèlement à un axe de canal (9) du canal principal (4),
c) du matériau pressé (2) est regroupé en utilisant un équipement de liage (6), de façon que le matériau pressé (2) forme une balle (3), **caractérisé par** les étapes de procédé suivantes :
d) dans un mode d'entretien, la presse à balles (1) est commandée au moyen de l'équipement de commande (10), de façon qu'au moins le compacteur principal (5) soit actionné avec une vitesse d'entretien qui est réduite par rapport à une vitesse de fonctionnement utilisée en mode de fonctionnement,
e) dans un mode de démarrage, la presse à balles (1) est commandée au moyen de l'équipement de commande (10), de façon que l'équipement d'entraînement (7) soit déplacé dans un sens de déplacement opposé à celui du mode de fonctionnement jusqu'à ce que l'équipement d'entraînement (7) adopte une position de départ,
f) la presse à balles (1) inclut au moins un système d'accumulation d'énergie (18) qui coopère avec un arbre d'entraînement (19) de l'équipement d'entraînement (7), de l'énergie de freinage étant accumulable au moyen du système d'accumulation d'énergie (18) au cours d'un freinage de l'arbre d'entraînement (19), et de l'énergie d'accélération pouvant être transmise à l'arbre d'entraînement (19) au cours d'une accélération de l'arbre d'entraînement (19) et
g) l'équipement d'entraînement (7) étant alimenté en énergie au moins proportionnellement au moyen du système d'accumulation d'énergie (18) au moins au cours du fonctionnement de la presse à balles (1) en mode de démarrage.

8. Procédé selon la revendication 7, **caractérisé en ce que** la vitesse d'entretien correspond au plus à 50 %, de préférence au plus à 40 %, plus préférentiellement au plus à 30 % de la vitesse de fonctionnement.

9. Procédé selon la revendication 7 ou 8, **caractérisé en ce que** le compacteur principal (5) est déplacé à l'intérieur du canal principal (4) dans une direction tournée vers l'équipement d'entraînement (7) à partir d'une position de départ de l'équipement d'entraînement (7) ainsi qu'au cours de la transition de la presse à balles (1) de son mode de démarrage vers son mode de fonctionnement.

10. Procédé selon une des revendications 7 à 9, l'équipement d'entraînement (7) comportant au moins une manivelle (11) qui est entraînable en rotation autour d'un axe d'entraînement (12) perpendiculaire à axe de canal (9) du canal principal (4), la manivelle (11) coopérant à une extrémité (13) distante radialement de l'essieu moteur (12), en formant une articulation tournante (14), avec l'équipement de transmission (8) qui coopère à son tour avec le compacteur principal (5) en formant une articulation tournante (15), de sorte qu'une rotation de la manivelle (11) autour de l'axe d'entraînement (12) peut provoquer le mouvement oscillant du compacteur principal (5), **caractérisé en ce que** le mode de démarrage est conçu de façon qu'un axe longitudinal (24) de la manivelle (11) en présence de l'équipement d'entraînement (7) dans sa position de départ - par rapport à un système de coordonnées (25) appliqué sur l'axe d'entraînement (12) - forme avec l'axe x positif (26) du système de coordonnées (25) un angle (27) entre 5° et 40°, de préférence entre 10° et 30°, plus préférentiellement un angle de 20°, l'angle (27) étant mesuré dans la direction d'un sens de rotation de la manivelle (11) existant dans le mode de fonctionnement de la presse à balles (1).

11. Procédé selon une des revendications 7 à 10, **caractérisé en ce que**, au cours d'une mise en service de la presse à balles (1), celle-ci est d'abord entraînée dans son mode de démarrage, les étapes de procédé suivantes étant réalisées à l'intérieur du mode de démarrage :
i) on contrôle si l'équipement d'entraînement (7) se trouve dans sa position de départ, en cas de résultat positif le mode de démarrage étant terminé.
ii) si l'équipement d'entraînement (7) ne se trouve pas dans sa position de départ, l'équipement d'entraînement (7) est actionné pendant la durée d'un incrément de temps à l'opposé de son sens de déplacement prévalant dans le mode de fonctionnement de la presse à balles (1).
iii) on contrôle si l'équipement d'entraînement (7) se trouve dans sa position de départ, en cas de résultat positif le mode de démarrage étant terminé et, en cas de résultat négatif, l'exécution du procédé se poursuivant à partir de l'étape de procédé ii) .
